Europäisches Patentamt

European Patent Office

Office européen des brevets

(11) Publication number : **0 517 474 A2**

(12) **EUROPEAN PATENT APPLICATION**

(21) Application number : 92305027.2

(22) Date of filing : 02.06.92

(51) Int. Cl.⁵ : **H04N 5/208**

(30) Priority : **04.06.91 JP 133008/91**

(43) Date of publication of application :
**09.12.92 Bulletin 92/50**

(84) Designated Contracting States :
**DE FR GB**

(71) Applicant : **SONY CORPORATION**
**6-7-35 Kitashinagawa Shinagawa-ku**
**Tokyo 141 (JP)**

(72) Inventor : **Sudou, Fumihiko, c/o Patents**
**Division**
**Sony Corporation, 6-7-35 Kitashinagawa**
**Shinagawa-ku, Tokyo 141 (JP)**
Inventor : **Tamura, Eiji, c/o Patents Division**
**Sony Corporation, 6-7-35 Kitashinagawa**
**Shinagawa-ku, Tokyo 141 (JP)**

(74) Representative : **Cotter, Ivan John et al**
**D. YOUNG & CO. 10 Staple Inn**
**London WC1V 7RD (GB)**

(54) **Aperture correction for video cameras.**

(57)   A video camera apparatus comprises a zooming unit having a zoom lens movable between wide and telephoto lens positions along an optical axis (X) for zooming an optical image from an object, an image pickup (capture) device (4) that receives the optical image from the zooming unit and generates a video signal, a circuit (3) for detecting a position of the zoom lens, a circuit (12, 13, 16, 17, 21) for generating a detail signal representative of high frequency information contained in the video signal, and a circuit (3) for controlling a boost frequency of the detail signal in accordance with an output of the position detecting circuit.

FIG. 1

This invention relates to video camera apparatus.

It is known for video cameras to include a zoom lens and an aperture correction circuit. A zoom lens is moved in the direction of an optical axis to change the magnification thereof in response to the distance between the position of the video camera and an object whose image is being captured, thereby to obtain a suitable image. A known aperture correction circuit comprises a delay circuit and an adder-subtracter circuit and is used to compensate for a deterioration of a response of an image pickup (capture) device and to emphasise sharpness in the video camera. A boost frequency fb of the aperture correction circuit is expressed as fb = 1/2td, where td is a delay time of the delay circuit.

The above-mentioned video camera is unsatisfactory to users because the boost frequency of the aperture correction circuit is fixed at a constant frequency even when a composition, i.e. a so-called picture pattern within a viewfinder of the video camera, is changed by operation of the zoom lens.

According to the invention there is provided a video camera apparatus comprising:

zooming means having a zoom lens movable along an optical axis for zooming an optical image from an object;

image pickup means for receiving the optical image from the zooming means and for generating a video signal;

position detecting means for detecting a position of the zoom lens;

means for generating a detail signal representative of high frequency information contained in said video signal; and

means for controlling a boost frequency of said detail signal in accordance with an output of the position detecting means.

A preferred video camera apparatus embodying the invention and described hereinbelow has a zoom function and an aperture correction function, and enables the above-mentioned shortcomings and disadvantages of the prior art to be eliminated or at least reduced, in that the boost frequency can be varied in response to changes of magnification of the zoom lens.

A better understanding of the invention will be provided by a consideration of the following detailed description of an illustrative embodiment thereof, which makes reference to the accompanying drawings, in which:

Figure 1 is a block diagram of a video camera apparatus embodying the invention;

Figure 2 is a block diagram showing more detail in an aperture correction signal generating circuit which can be used in the video camera apparatus of Figure 1;

Figure 3 is a block diagram showing a circuit configuration which can be used to realise a variable coefficient high-pass filter used in the circuit of Figure 2;

Figure 4 shows a table used to explain operation of the variable coefficient high-pass filter;

Figure 5 is a frequency characteristic graph of an aperture correction signal, to which reference will be made in explaining how a boost frequency provided by aperture correction processing is changed in accordance with the magnification of a zoom lens;

Figures 6A to 6C are waveform diagrams used to explain the aperture correction processing effected when the zoom lens is placed at a wide angle lens position;

Figures 7A to 7C are waveform diagrams used to explain the aperture correction processing effected when the zoom lens is placed at a telephoto lens position;

Figures 8A and 8B are diagrams showing examples of images before and after aperture correction processing when the zoom lens is at the wide angle lens position; and

Figures 9A and 9B are diagrams showing examples of images before and after aperture correction processing when the zoom lens is at the telephoto lens position.

A video camera apparatus embodying the invention will now be described with reference to the drawings.

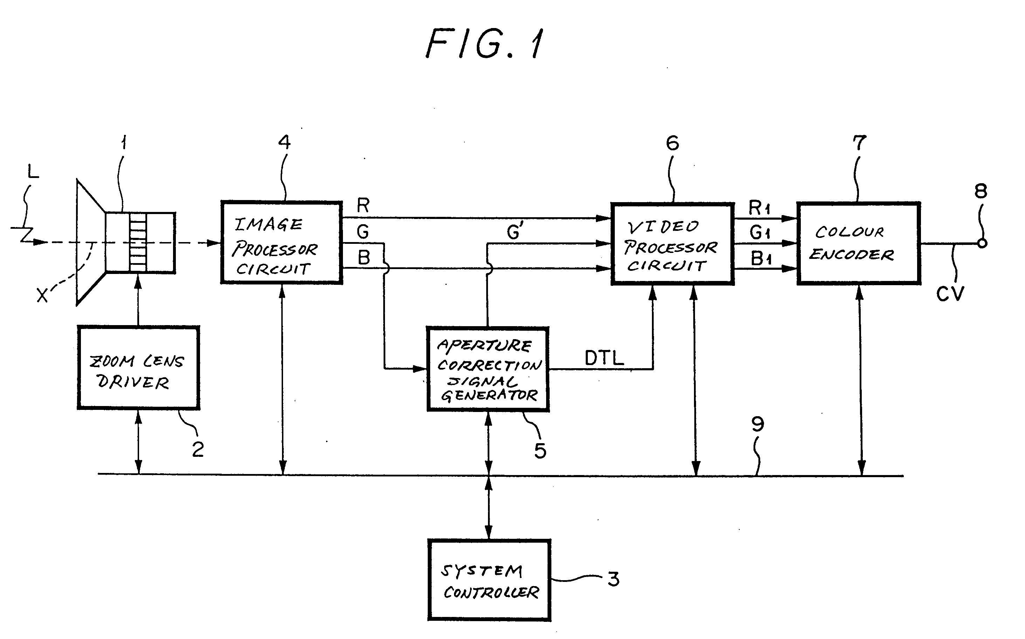

Figure 1 of the accompanying drawings shows in block diagram form the overall arrangement of the video camera apparatus. Referring to Figure 1, a zoom lens composed of lens groups (not shown) is disposed so as to be movable along the direction of an optical axis X of an optical system 1. The zoom lens is driven by a zoom driver circuit (zoom lens driver) 2 which includes a motor and an encoder. The motor is controlled by a system controller 3, thereby varying magnification of the zoom lens. Accordingly, the system controller 3 can determine the distance by which the zoom lens moves in the direction of the optical axis X, i.e. the position of the zoom lens, on the basis of pulses from the encoder. Alternatively, without using the encoder, the position of the zoom lens can be determined by a drive control signal (written in a read-only memory (ROM) of the system controller 3) supplied to the zoom driver circuit 2 from the system controller 3. Hereinafter, the maximum magnification provided by the zoom lens will be referred to as "the telephoto lens position" and the minimum magnification will be referred to as "the wide angle lens position".

Light L having image information is supplied through the zoom lens to an image processor circuit 4. The image processor circuit 4 comprises an image pickup (capture) device such as a charge-coupled device (CCD) or the like, an amplifier, and an analogue-to-digital (A/D) converter or the like, and converts the light L supplied thereto into red, green and blue signals R, G and B, that is three primary colour digital signals. The signal G is delayed by a delay time of one horizontal period (hereinafter simply referred to as 1H) in an aperture correction signal generating circuit (generator) 5 and then fed to a video processor circuit 6 as a signal G'. Since the aperture correction signal generating circuit outputs the 1H-delayed signal (the signal G' in this embodiment) as a signal of the main system in a manner well known per se, the signals R and B are delayed by 1H relative to the signal G by the image processor circuit 4. The video processor circuit 6 is supplied with an aperture correction signal DTL from the aperture correction signal generating circuit 5.

The video processor circuit 6 aperture-corrects the signals R, G' and B supplied thereto in accordance with the aperture correction signal DTL and also subjects the signals to other suitable signal processing, such as gamma correction or the like. Then, the video processor circuit 6 supplies three thus-processed primary colour signals R1, G1 and Bl to a colour encoder 7. (While the aperture correction signal DTL is, as described above, generated on the basis of the signal G, this is not essential: the aperture correction signal DTL may instead be generated on the basis of either of the signals G and R.) The colour encoder 7 includes a digital-to-analogue (D/A) converter or the like and converts the three primary colour digital signals R1, G1 and B1, processed in accordance with some suitable signal processing technique such as aperture correction, gamma correction or the like, into an analogue composite video signal CV which is then fed to a terminal 8.

The zoom driver circuit 2, the image processor circuit 4, the aperture correction signal generating circuit 5, the video processor circuit 6 and the colour encoder 7 are coupled to the system controller via a bus 9. The system controller 3 includes a central processing unit (CPU), a ROM, and a random access memory (RAM) or the like, and controls operation of the above-mentioned circuit components 2, 4, 5, 6 and 7.

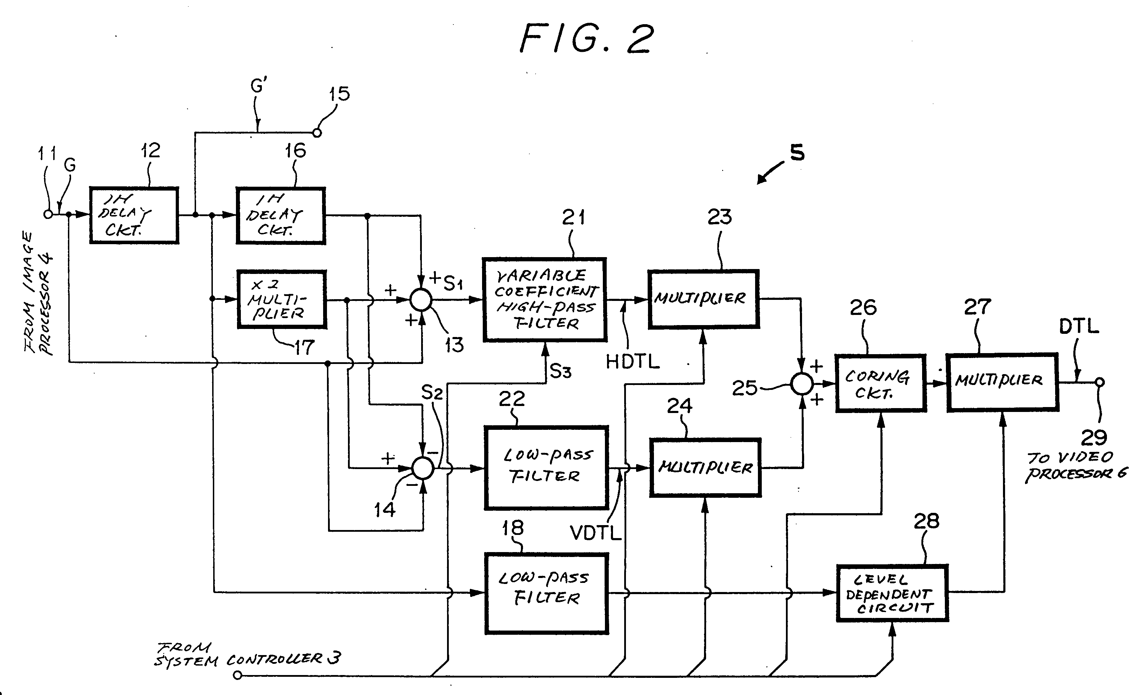

Figure 2 shows in more detail an example of how the aperture correction signal generating circuit 5 shown in Figure 1 may be constructed. As shown in Figure 2, the signal G output from the image processor circuit 4 is supplied via an input terminal 11 to a 1H delay circuit 12, a positive input terminal of an adder 13 and a negative input terminal of an adder 14. (In this embodiment, the adder 13 and the like are expressed by summing points in the block diagram of Figure 2.) The output signal G' is obtained from the 1H delay circuit 12 and is supplied via an output terminal 15 to the video processor circuit 6; and also is supplied to a 1H delay circuit 16, a X 2 multiplier 17 and a low-pass filter 18.

An output signal from the 1H delay circuit 16 is supplied to another positive input terminal of the adder 13 and to another negative input terminal of the adder 14, and an output signal from the X 2 multiplier 16 is supplied to positive input terminals of the adders 13 and 14. An edge signal S1 representative of an edge component of the signal G is supplied from the adder 13 to a variable coefficient high-pass filter 21, and an output signal S2 from the adder 14 is supplied to a low-pass filter 22.

The variable coefficient high-pass filter 21 is formed by a finite impulse response (FIR) type digital filter, and a characteristic (coefficient) thereof is varied by a control signal S3 supplied thereto from the system controller 3.

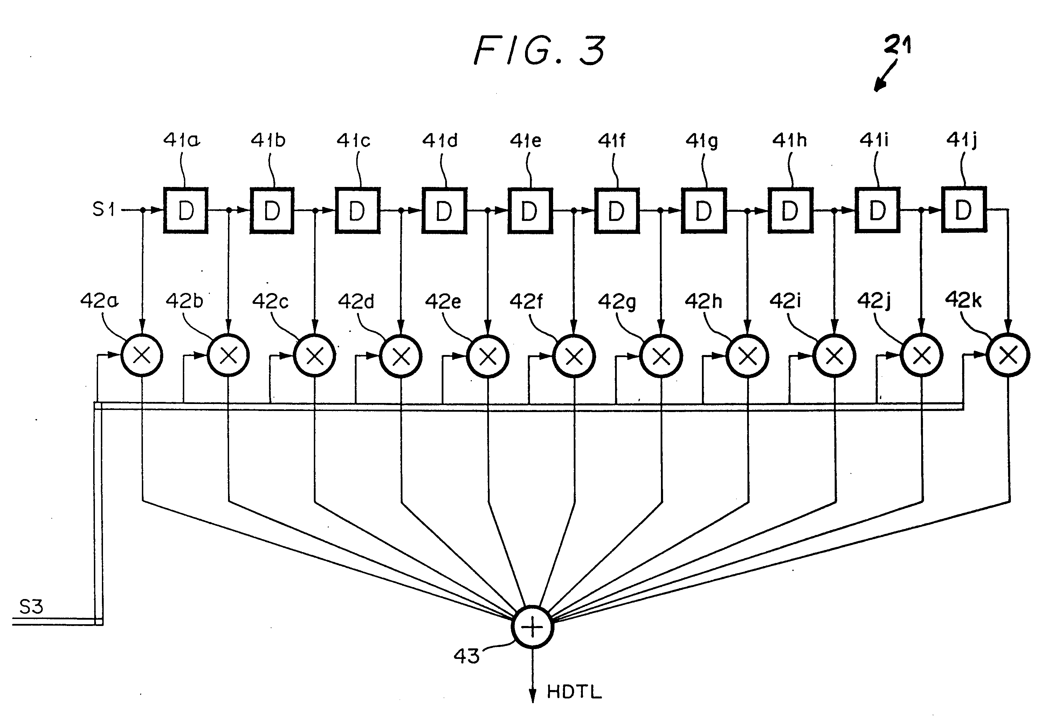

Figure 3 shows in block form a circuit configuration which can be used to realise the variable coefficient high-pass filter 21. Referring to Figure 3, the variable coefficient high-pass filter 21 comprises delay elements 41a to 41j, each of which is formed of a flip-flop, multipliers 42a to 42k, and an adder 43.

The signal S1 supplied from the adder 13 is sequentially delayed by the respective delay elements 41a to 41j and output to the respective multipliers 42a to 42k from between the delay elements 41a to 41j. The multipliers 42a to 42k multiply the signals from the respective delay elements with coefficients varying with boost frequency on the basis of the control signal S3 supplied thereto from the system controller 3, whereby the characteristic (coefficient) of the variable coefficient high-pass filter 21 is varied.

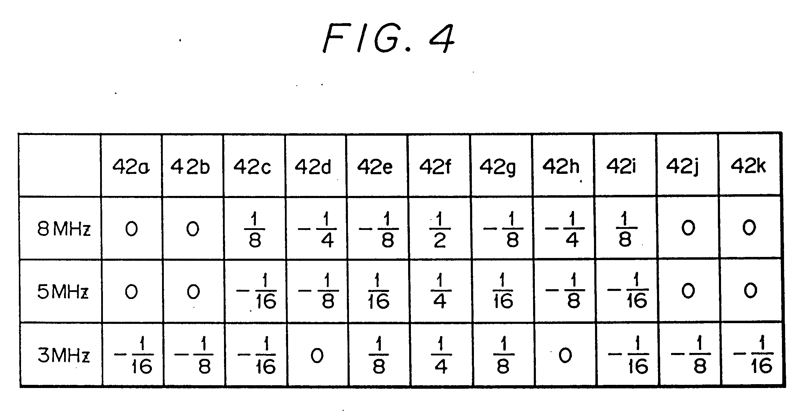

Figure 4 is a table showing coefficients with which the signals tapped from the delay elements 41a to 41j are multiplied, by the respective multipliers 42a to 42k, when the boost frequency is assumed to be 8 MHz, 5 MHz and 3 MHz, respectively.

Referring back to Figure 2, a horizontal aperture correction signal HDTL, which is an output signal from the variable coefficient high-pass filter 21, and a vertical aperture correction signal VDTL, which is an output of the low-pass filter 22, are supplied through respective multipliers 23, 24, each of which is operable as a gain adjusting device, to an adder 25. An output signal from the adder 25 is supplied through a coring circuit 26, serving as a noise eliminating device for a small amplitude, to one input terminal of a multiplier 27. A noise eliminating amplitude applied by the coring circuit 26 can be varied by a control signal from the system controller 3.

The multiplier 27 is supplied at another input terminal thereof with an output signal from the low-pass filter 18 via a level dependent circuit 28. The multiplier 27 generates the aperture correction signal DTL. The output signal from the low-pass filter 18 corresponds to a luminance component of the signal G'. The level dependent circuit 28 is operative to avoid the signal-to-noise (S/N) ratio of a dark portion of the image from being deteriorated by inhibiting the aperture correction processing from being carried out on the black level side corresponding to the dark portion of the image. A characteristic of the level dependent circuit 28 can be varied by a control signal supplied thereto from the system controller 3. The control signal supplied to the level dependent circuit 28 is changed in response to the level of the control signal supplied to the multipliers 23 and 24 which determine the amplitude of the aperture correction signal DTL. When the control signal supplied to the level dependent circuit 28 is changed as described above, then the output signal from the level dependent circuit 28 becomes a signal which can correspond to the amplitude of the aperture correction signal DTL.

The control signals for changing the gains of the multipliers 23, 24 are supplied from the system controller 3.

The aperture correction signal DTL thus generated is supplied to the video processor circuit 6 via an output terminal 29.

The operation of the above-described embodiment will now be explained. As shown in Figure 2, the signal G obtained from the image processor circuit 4 is supplied to the input terminal 11 of the aperture correction signal generating circuit 5, and converted by the 1H delay circuits 12, 16, the X 2 multiplier 17 and the adder 14 into the signal S2 which is used to generate the vertical aperture correction signal VDTL. The signal S2 is converted by the low-pass filter 22 into the vertical aperture correction signal VDTL whose edge portions are smoothed, and then fed to the multiplier 24. The multiplier 24 enlarges or reduces (i.e. reduces in most cases) this vertical aperture correction signal VDTL on the basis of the control signal from the system controller 3. The thus-processed vertical aperture correction signal VDTL from the multiplier 24 is supplied to one input terminal of the adder 25.

The signal G supplied to the input terminal 11 is converted by the 1H delay circuits 12, 16, the X 2 multiplier 17 and the adder 13 into the signal S1 which is used to generate the horizontal aperture correction signal HDTL. The signal S1 is converted into the horizontal aperture correction signal HDTL by the variable coefficient high-pass filter 21. According to this embodiment, the cut-off frequency of the variable coefficient high-pass filter 21 is varied on the basis of the control signal S3 from the system controller 3 such that, when the zoom lens is placed at the telephoto lens position, the cut-off frequency becomes lowest, and such that, when the zoom lens is placed at the wide angle lens position, the cut-off frequency becomes highest. The cut-off frequency of the variable coefficient high-pass filter 21 is gradually increased as the zoom lens is moved between the telephoto lens position and the wide angle lens position. Since the position of the optical system 1 which changes the magnification of the zoom lens can be determined by the system controller 3 on the basis of the number of pulses from the encoder of the zoom lens driver 2, the cut-off frequency of the variable coefficient high-pass filter 21 may be varied on the basis of this number of pulses.

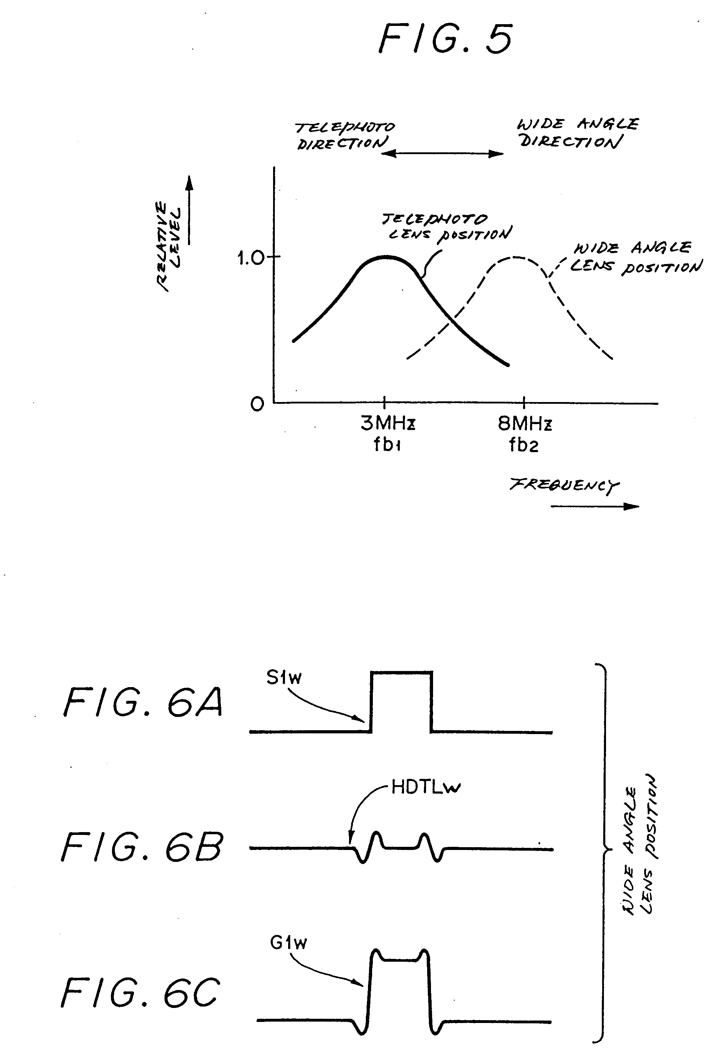

When the cut-off frequency of the variable coefficient high-pass filter 21 is gradually increased between the telephoto lens position and the wide angle lens position of the zoom lens, the boost frequency fb of the horizontal aperture correction signal HDTL is changed from a boost frequency fb1 (about 3 MHz in this embodiment) for the telephoto lens position to a boost frequency fb2 (about 8 MHz in this embodiment) for the wide angle lens position, as shown in Figure 5.

As shown in Figure 2, the horizontal aperture correction signal HDTL and the vertical aperture correction signal VDTL are properly amplitude-adjusted by the multipliers 23, 24 and then supplied through the adder 25 and the coring circuit 26 to the one input terminal of the multiplier 27. The signal supplied to the one input terminal of the multiplier 27 is multiplied by the output signal from the level dependent circuit 28 and thereby is converted into the aperture correction signal DTL based on the level of the luminance signal. This aperture correction signal DTL is supplied to the video processor circuit 6 (see Figure 1).

An example of the aperture correction processing effected by the video processor circuit 6 will now be described with reference to an analogue waveform corresponding to the digital signal.

If the signal S1 supplied to the input side of the variable coefficient high-pass filter 21 when the zoom lens is set in the wide angle lens position is expressed as S1 = S1w (see Figure 6A), then a horizontal aperture correction signal HDTLw, which is the output signal from the variable coefficient high-pass filter 21, is as shown in Figure 6B. Therefore, by virtue of the aperture correction processing effected in the video processor circuit 6, an output signal G1w of the video processor circuit 6 is as shown in Figure 6C.

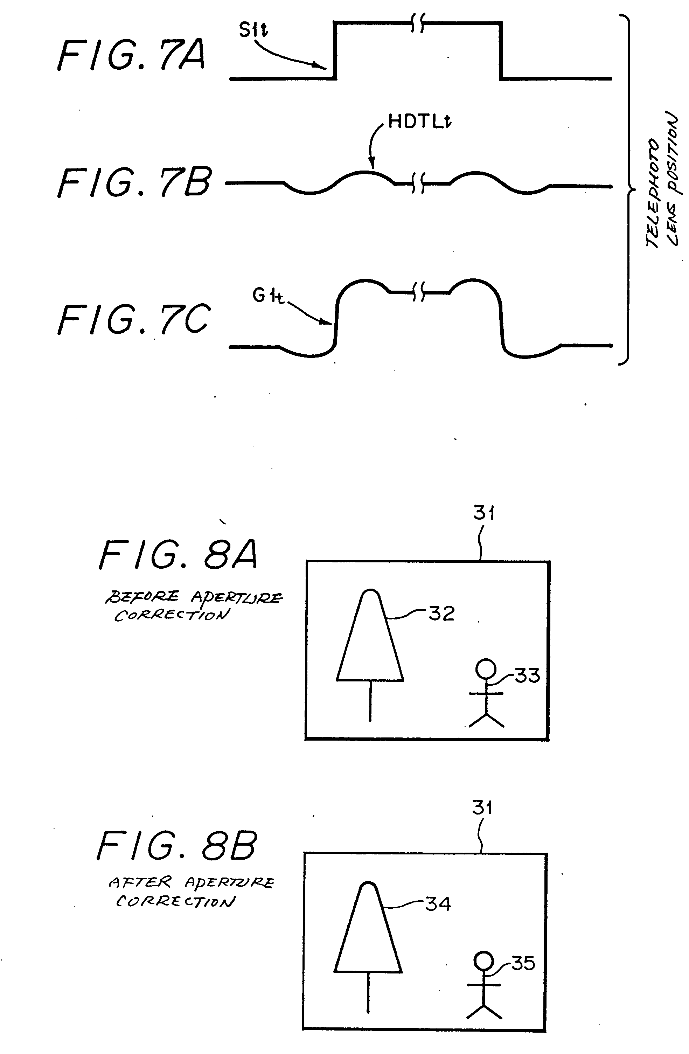

Similarly, if the signal S1 supplied to the input side of the variable coefficient high-pass filter 21 when the zoom lens is set in the telephoto lens position is expressed as S1 = S1t (see Figure 7A), then a horizontal aperture correction signal HDTLt, which is the output signal from the variable coefficient high-pass filter 21, becomes as shown in Figure 7B. Therefore, by virtue of the aperture correction processing effected in the video processor circuit 6, an output signal G1t of the video processor circuit 6 is as shown in Figure 7C.

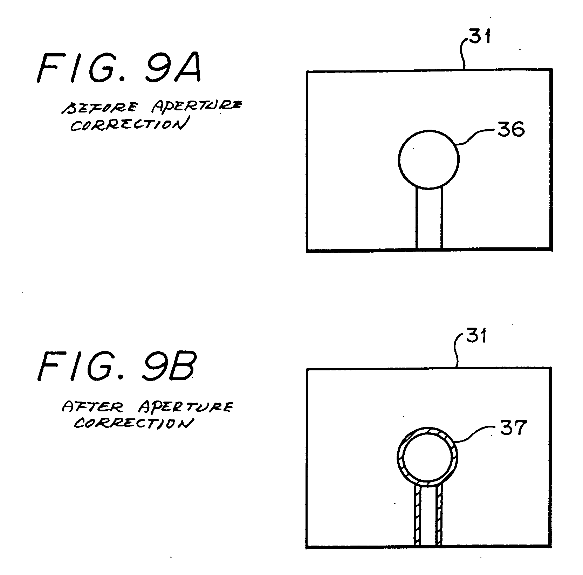

In this case, according to this embodiment, the boost frequency fb in the aperture correction processing is changed in unison with changes of magnification of the zoom lens so that, when the zoom lens is placed at the wide angle position, as shown in Figures 8A and 8B, images 32, 33 on a picture screen 31 of a monitor are seen as images 34, 35 whose outlines are corrected (emphasised) by relatively fine lines. On the other hand, when the zoom lens is set at the telephoto lens position, as shown in Figures 9A and 9B, an image 36 is seen as an image 37 whose outline is corrected (emphasised) by relatively bold lines (shown cross-hatched in Figure 9B).

Consequently, since the boost frequency in the aperture correction processing is varied when the composition, i.e. the picture pattern within the viewfinder in the video camera, is changed by operation of the zoom lens, an image which is very preferable to users of the video camera can be obtained. For example, it is possible to suppress the occurrence of moiré (cross-colour) or the like which tends to occur when an object of a stripe-shaped pattern is observed through the zooming process.

While the boost frequency fb is increased at the wide angle lens position of the zoom lens and decreased at the telephoto lens position, as described above, the present invention is not limited thereto: the boost frequency fb may in general be varied in accordance with the picture patterns of a plurality (n) of particular objects. In this case, the distance from the telephoto lens position to the wide angle lens position of the zoom lens is divided by m (where m is greater than or equal to 2) and memory areas (e.g. ROMs in the system controller 3) corresponding to the number n of objects are prepared at the telephoto lens position, the wide angle lens position and the divided positions. Then, an optimum boost frequency selected beforehand in rehearsal shooting is written in the memory area, thereby effecting fine aperture correction processing corresponding to the object (picture pattern).

As set out above, since in the above-described video camera apparatus the position in the optical axis direction of the optical system for changing the magnification of the zoom lens is detected by position detecting means and the boost frequency of the aperture correction signal is varied by control means on the basis of the result detected by the position detecting means, the boost frequency can be varied in response to changes of magnification of the zoom lens.

**Claims**

1. A video camera apparatus comprising:
    zooming means having a zoom lens movable along an optical axis for zooming an optical image from an object;
    image pickup means (4) for receiving the optical image from the zooming means and for generating a video signal;
    position detecting means (3) for detecting a position of the zoom lens;
    means (12, 13, 16, 17, 21) for generating a detail signal representative of high frequency information contained in said video signal; and
    means (3) for controlling a boost frequency of said detail signal in accordance with an output of the position detecting means.

2. Apparatus according to claim 1, wherein the zoom lens is movable between a wide angle position and a telephoto position.

3. Apparatus according to claim 2, in which the boost frequency of said detail signal is arranged to be higher when the zoom lens is in the wide angle position than when the zoom lens is in the telephoto position.

4. Apparatus according to claim 1, claim 2 or claim 3, in which said detail signal is a horizontal detail signal (HDTL).

5. Apparatus according to any one of the preceding claims, in which the detail signal generating means comprises means (12, 13, 16, 17) for generating an edge signal (S1) representing an edge component of said video signal, and a high-pass filter (21) for passing a high frequency component of said edge signal so as to generate said detail signal.

6. Apparatus according to claim 5, in which said high-pass filter (21) is a finite impulse response type digital filter (41, 42, 43).

# FIG. 1

FIG. 2

# FIG. 3

EP 0 517 474 A2

# FIG. 4

|  | 42a | 42b | 42c | 42d | 42e | 42f | 42g | 42h | 42i | 42j | 42k |
|---|---|---|---|---|---|---|---|---|---|---|---|
| 8 MHz | O | O | $\frac{1}{8}$ | $-\frac{1}{4}$ | $-\frac{1}{8}$ | $\frac{1}{2}$ | $-\frac{1}{8}$ | $-\frac{1}{4}$ | $\frac{1}{8}$ | O | O |
| 5 MHz | O | O | $-\frac{1}{16}$ | $-\frac{1}{8}$ | $\frac{1}{16}$ | $\frac{1}{4}$ | $\frac{1}{16}$ | $-\frac{1}{8}$ | $-\frac{1}{16}$ | O | O |
| 3 MHz | $-\frac{1}{16}$ | $-\frac{1}{8}$ | $-\frac{1}{16}$ | O | $\frac{1}{8}$ | $\frac{1}{4}$ | $\frac{1}{8}$ | O | $-\frac{1}{16}$ | $-\frac{1}{8}$ | $-\frac{1}{16}$ |

# FIG. 5

TELEPHOTO
DIRECTION

WIDE ANGLE
DIRECTION

RELATIVE LEVEL →

TELEPHOTO
LENS POSITION

WIDE ANGLE
LENS POSITION

1.0

O

3MHz
fb₁

8MHz
fb₂

FREQUENCY →

FIG. 6A

S1w

FIG. 6B

HDTLw

FIG. 6C

G1w

WIDE ANGLE LENS POSITION

*FIG. 7A*

S1t

*FIG. 7B*

HDTLt

*FIG. 7C*

G1t

TELEPHOTO LENS POSITION

*FIG. 8A*

BEFORE APERTURE CORRECTION

31

32

33

*FIG. 8B*

AFTER APERTURE CORRECTION

31

34

35

# FIG. 9A

BEFORE APERTURE
CORRECTION

# FIG. 9B

AFTER APERTURE
CORRECTION